Europäisches Patentamt

European Patent Office

Office européen des brevets

(11) Publication number: **0 429 200 A2**

## (12) EUROPEAN PATENT APPLICATION

(21) Application number: **90311926.1**

(22) Date of filing: **31.10.90**

(51) Int. Cl.5: **H04H 3/00**

(30) Priority: **16.11.89 GB 8925910**

(43) Date of publication of application:
**29.05.91 Bulletin 91/22**

(84) Designated Contracting States:
**DE ES FR IT SE**

(71) Applicant: **GEC-MARCONI LIMITED**
**The Grove, Warren Lane**
**Stanmore, Middlesex HA7 4LY(GB)**

(72) Inventor: **Wildey, Christopher George**
**18 Manland Way**
**Harpenden, Hertfordshire, AL5 4QS(GB)**

(74) Representative: **Keppler, William Patrick**
**Central Patent Department Wembley Office**
**The General Electric Company, p.l.c. Hirst**
**Research Centre East Lane**
**Wembley Middlesex HA9 7PP(GB)**

(54) **Broadcast networks.**

(57) A network of transmitters for providing broadcast signal coverage of a group of contiguous reception areas, there being one transmitter site within each reception area. Two or more directional transmit antennas at each site cover the reception area by the use of different frequencies or polarisations (F1,F2). Reception of the broadcast signal is by means of a directional receive antenna. Interference between neighbouring sites is reduced by arranging the orientation of the antennas at adjacent sites (E,G) in such a way that a receiver located (D) on a line through the sites (E,G) will be within the beam angle of one antenna (F2) at the nearer site (E), but outside the beam angle of a potentially interfering antenna (F2) at the further site (G). For this purpose, at adjacent sites on the line the transmit antennas have orientations which deviate from a reference orientation in opposite directions, but with equal magnitude (α). The network may have a triangular lattice structure, with two 180-degree sector antennas at each site, or a square lattice structure with four 90-degree sector antennas at each site.

*Fig. 4.*

## BROADCAST NETWORKS

This invention relates to broadcast networks, in particular to networks of transmitting units for providing broadcast signal coverage of a plurality of contiguous reception areas. The networks are particularly suitable for microwave broadcast systems such as Microwave Video Distribution Systems (MVDS) and Microwave Multi-point Distribution Systems (MMDS), which depend upon line-of-sight or near line-of-sight propagation.

Conventional wide coverage broadcast networks use transmitters having omnidirectional antennas, with each transmitter radiating one of several frequency sets. By "frequency set" is generally meant a group or band of frequencies, different frequencies within any set carrying different signals or "programmes", but it should be noted that the term "frequency set" as used herein is to be taken also to include a reference to the selective use of signal polarisation. Thus, for example, radiating both horizontally - and vertically - polarised signals in one frequency band can yield two frequency sets as such. In these networks adjacent transmitters use different frequency sets to prevent mutual interference and a directional receiving antenna is required, generally directed toward the nearest transmitter, subject to there being a satisfactory line-of-sight.

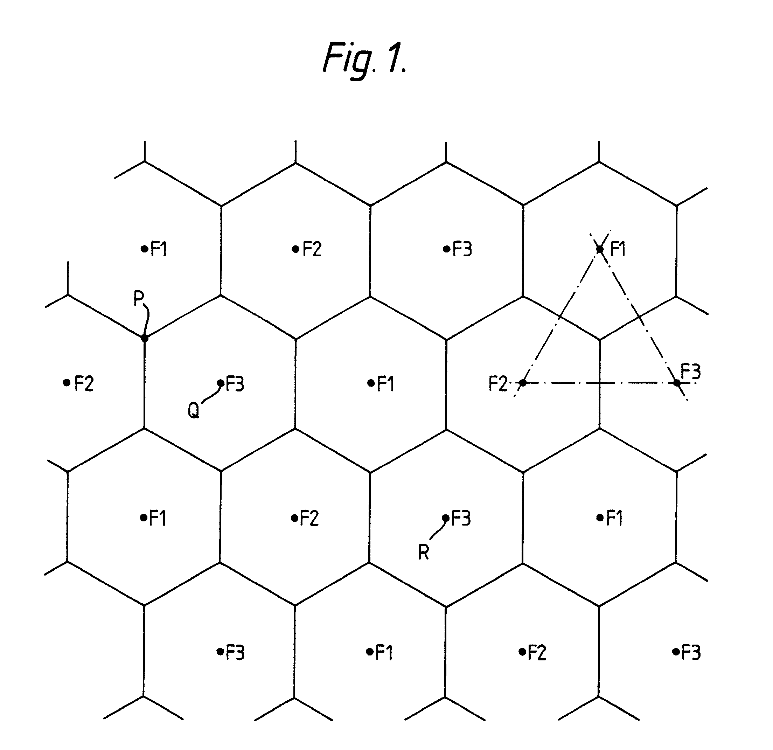

There are various lattice networks for transmitter positioning to minimise interference between transmitters radiating the same frequency set. One example is the triangular lattice shown in Figure 1 of the accompanying drawings, which requires a minimum of three frequency sets, indicated by F1, F2 and F3. This particular arrangement assumes the use of a conventional receiving antenna having a directional pick-up characteristic, so that, at any reception point, there is only one other transmitter lying in the same general direction as the local transmitter and using the same frequency set, which is close enough to be a potential source of interference. On a flat earth basis and under normal free-space propagation conditions, the triangular lattice arrangement will ensure that the interfering signal power from such a distant transmitter is always at least 16 times smaller than (i.e. 12dB below) the wanted signal power. This figure arises from the worst case situation where the point of reception is at the extremity of the normal coverage area of the local transmitter and an interfering distant transmitter lies in the same direction with respect to the receiver as the local transmitter. In these circumstances (for example, at point P in Figure 1), any directional sensitivity of the receiving antenna has no effect on the relative strengths of the two signals. It can be seen from that, in this case, the ratio of the distance to the interfering transmitter (at point R) to the distance to the local transmitter (at point Q) is 4; hence the power ratio of 16.

Lower interference levels can be achieved by increasing the number of frequency sets (and hence increasing the frequency re-use distance) or by relying upon a combination of terrain screening, earth curvature, partial frequency offsets and atmospheric absorption for additional margin.

It is an object of the present invention to provide a network giving improved broadcast signal coverage of a plurality of contiguous reception areas in terms of at least either the degree of interference between neighbouring transmitters or the efficiency of frequency spectrum usage.

According to the invention, there is provided a network of transmitting units for providing broadcast signal coverage of a plurality of contiguous reception areas, each defined by a respective transmitting unit situated at a site within the reception area, each transmitting unit comprising two or more directional antennas, the network being characterised in that, to minimise interference at a point which lies in line with and beyond adjacent sites in the network, antennas, one from each of the two sites, which potentially cause said interference, are directed respectively more and less towards the point.

According to one aspect of the invention, in a network as aforedescribed each reception area is defined by the beams of said two or more antennas, the common boundaries between adjacent beams being at least partly radial, each transmitting unit being so adapted that its transmissions of the broadcast signal in adjacent beams can be distinguished by a receiver located on one of the common boundaries, corresponding boundaries at adjacent sites on a line through a plurality of the sites lying on alternate sides of the line.

The transmitting unit may comprise two antennas, each antenna having a beam angle of $180°$. Alternatively, the transmitting unit may comprise four antennas, each antenna having a beam angle of $90°$.

The corresponding boundaries may deviate from said line by a common angle, but in opposite directions. In embodiments of the invention employing two $180°$ beam antennas or four $90°$ beam antennas, the common angle preferably lies substantially in the range 15 to $25°$.

Each transmitting unit may be adapted to transmit the signal on different frequencies to permit discrimination between its transmissions in any two adjacent beams. Alternatively, each transmitting unit may be adapted to transmit the signal with different polarisations to permit discrimination between its transmissions in any two adjacent beams.

Two networks in accordance with the invention will now be described, by way of example only, with reference to the accompanying drawings, of which:

Figure 1 shows a known triangular lattice network of omnidirectional transmitters, as referred to above;

Figures 2(a), (b) and (c) show typical radiation pattern templates of microwave antennas;

Figure 3 shows a basic triangular lattice network of directional transmit antennas;

Figure 4 shows a triangular lattice network of directional transmit antennas according to the invention;

Figure 5 shows a basic square lattice network of directional transmit antennas; and

Figure 6 shows a square lattice network of directional transmit antennas according to the invention.

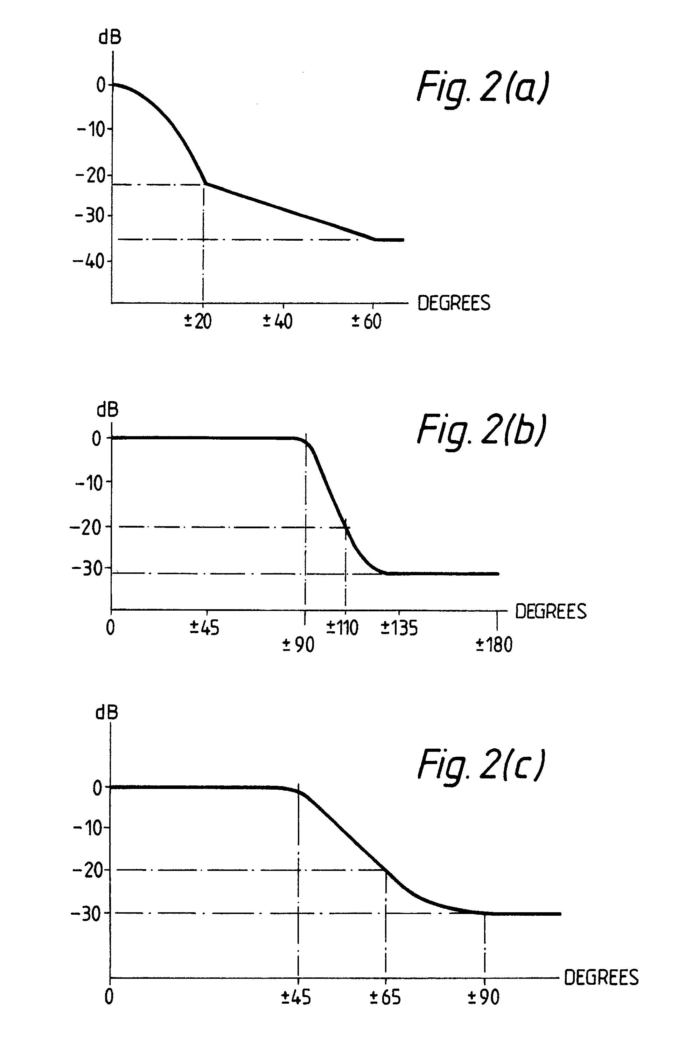

Referring to the drawings, Figures 2(a), (b) and (c) show radiation pattern templates that can be achieved with microwave antennas. Figure 2(b) shows the radiation pattern of a typical 180° sector transmit antenna. The important parameters are the high front/back ratio and the rapid cut-off rate just above +/-90° from the antenna boresight (i.e. axis of symmetry). For satisfactory operation the cut-off should fall by at least 20dB within, say, 20° from the 90° position. Figure 2(a) shows the radiation pattern of a typical receive antenna, which similarly requires a high front/back ratio, as well as a reasonably small beam angle. In this example the template assumes at least a 20dB reduction at +/-20° from the boresight. Figure 2(c) shows an alternative transmit antenna characteristic to which reference is made later.

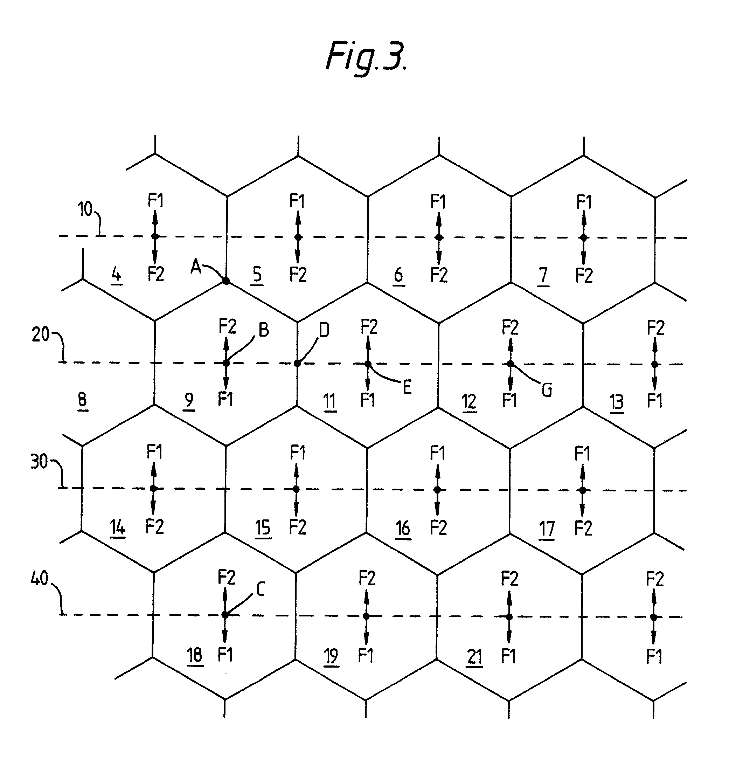

Figure 3 illustrates a triangular lattice network which may be viewed as comprising a honeycomb structure of hexagonal cells, there being one transmitter site at the centre of each cell. For any three mutually adjoining cells the associated transmitter sites lie at the corners of an equilateral triangle. Each site accommodates a pair of 180° sector antennas of the type to which Figure 2(b) relates, the two antennas radiating different frequency sets F1 and F2. The antennas at each site are pointed in opposing directions, i.e. 180° apart, so that each cell approximately represents a reception area, defined by the two 180° antenna beams, in which reliable reception may be reasonably expected. The common boundaries between the two beams are at least partly radial and a receiver located on one of the boundaries can discriminate between the transmissions in the two beams by virtue of the different frequency sets used.

The lattice may also be viewed as comprising a set of adjacent rows of cells, one such set of rows being identified in the figure by the dotted lines 10, 20, 30, 40, with the cells 4,5,6 and 7, for example, making up part of row 10. It will appreciated that this definition of the rows is arbitrary, there being two alternative sets of rows that could equally be drawn through the network of sites. The antennas in any given row and radiating the same frequency set, either F1 or F2, are orientated so that they all point in the same direction. As can be seen, in each row the antenna boresights, indicated by the arrowed lines at each site, lie normal to the row. Thus, at each site the boundaries between the two antenna beams are aligned with the row containing that site.

It can be seen from Figure 3 that, for a given frequency set, the antennas in any two adjacent rows are always pointing in opposite directions - whether they point towards each other (as for example, rows 10 and 20 for frequency set F2) or away from one another (as for example, rows 20 and 30, again for frequency set F2). It is also to be observed that, as a consequence of this arrangement of the antennas, for non-adjacent rows, such as 10 and 30, having one intervening row (20 in this case) the antennas of a particular frequency set are all pointed in the same direction. This is one feature of the lattice network which serves to reduce interference between neighbouring transmitters using the same frequency set, as will now be explained.

Consider, by way of example, that reception of a broadcast is required at the point A, i.e. at the extremity of the coverage area of the transmitter at point B in the cell 9 of row 20. Frequency set F2 is selected since the antenna at B for this frequency set is directed towards point A. If the receiving antenna used is of the type to which Figure 2(a) relates, then the transmissions from neighbouring antennas of the same frequency set F2 in cells 4 and 5 in row 10 are rejected due to the narrow beam angle and the high front/back ratio of the receiving antenna at A. The transmissions from neighbouring antennas of the same frequency set F2 in cells 14 and 15 of row 30 are rejected due to the high front/back ratio of the transmit antennas. Reception of transmissions from antennas in cells 8 and 11 of the same row 20 as cell 9 is also excluded by the narrow beam angle of the receiving antenna. Thus, it can be seen that the nearest transmitter to point A which will cause interference lies at point C in the cell 18 of row 40. If the distance from A to B is x, then the distance from A to C will be 4x. Thus, the interference power from the transmitter at C will be at least 16 times smaller than (i.e. 12dB below) the signal power from the local transmitter at A. This result is as good as that obtained in the three-frequency set arrangement of Figure 1.

Consider now that reception of a broadcast is required at a point D, i.e. at the extremity of the coverage area of the transmitter at point E in cell 11 of row 20. It can be seen that, irrespective of whether frequency set F1 or F2 is chosen, the point D lies at the angular extremity of either antenna beam from the transmitter at E, i.e. on the boundary between the two 180° beams defining the reception area of cell 11. Thus, reliable reception may be difficult at this particular point, depending on the cut-off rate above 90° from the boresight of the transmit antenna being used. If it is assumed that reliable reception can be obtained at point D, i.e. at 90° from the boresight, then interference may be expected from the transmitter at point G in the adjacent cell 12. Further, the choice of frequency set for reception will have no effect on the level of the interfering signal, since the two antennas at G have the same orientation relative to the point D as the two antennas at E. If the distance from D to E is y, then the distance from D to G will be 3y. Thus, the interference power from the transmitter at G will be at least 9 times smaller than (i.e. 9.5dB below) the signal power from the local transmitter at E. This difference in the two signal power levels may be insufficient to permit satisfactory reception at point D.

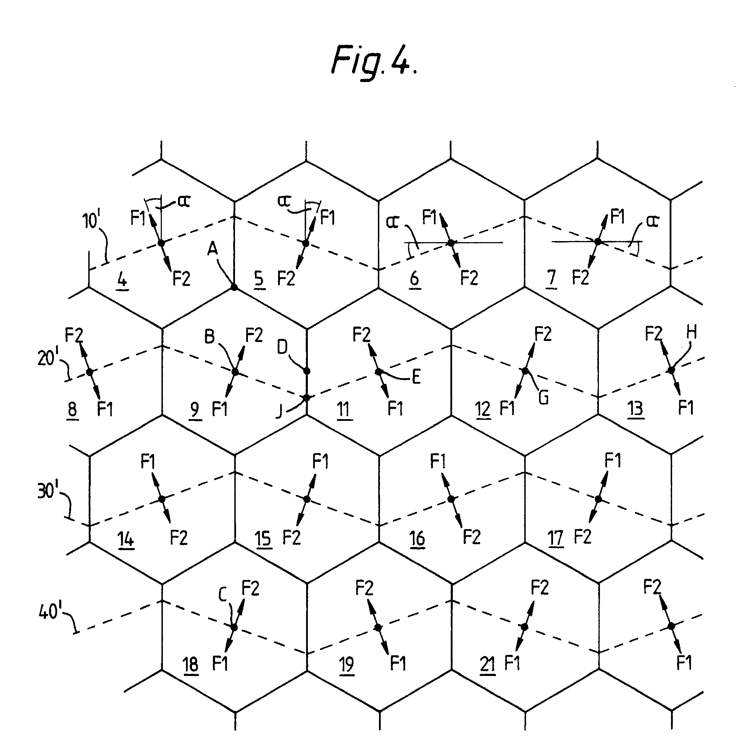

The problem of interference from a transmitter in an adjacent cell of the same row can be alleviated by making use of the transmit antenna cut-off rate at angles greater than 90° from the boresight. If the transmit antenna has the radiation pattern template shown in Figure 2(b), the interfering signal level will fall by at least 20dB if the antenna at point G is steered so that its boresight is orientated a further 20° in a direction away from the reception point D. In accordance with the invention, interference at point D is minimised by directing the potentially interfering antennas at E and G respectively more and less towards point D. One way of achieving this benefit throughout the whole lattice is to similarly steer the antennas in each cell through the same angle, but in opposite directions for adjacent cells within each row. In this way, at adjacent sites in any row, corresponding boundaries between antennas will then lie on alternate sides of a line through the sites in that row. This modification to Figure 3 is shown in Figure 4, to which reference is now made.

In Figure 4, the zig-zag dotted lines 10′, 20′, etc. each represent, as in Figure 3, a line normal to the antenna boresights at each site. The angle through which each antenna boresight has been steered is denoted by α. The essentially radial part of the boundary between the two antenna beams at each site has been similarly steered through the same angle α. If the angle α is made 20°, it can be seen that reception at point D can be reliably obtained on frequency set F2 from the transmitter at E, since the point D now lies at an angle of 70° from the antenna boresight, i.e. well within the beam of the F2 transmit antenna at E. However, interference from the transmitter at G is now attenuated by at least 20dB (without taking account of its further distance from D), since the point D lies at an angle of 110° from the antenna boresight, i.e. beyond the extremity of the beam of the F2 antenna at G. The next nearest antenna radiating towards the point D on frequency set F2 is that of the transmitter at H in cell 13. If the distance from D to E is y, as previously, then the distance from D to H will be 5y. Thus, it can be seen that the interference power from the transmitter at H will be at least 25 times smaller than (i.e. approximately 14dB below) the signal power from the local transmitter at E. Hence, at D there will be no significant interference from the transmitters at either G or H.

One effect of steering the antenna boresights through the angle α is that, for reception at point D of a broadcast from the transmitter at E, there is now a positive choice of frequency set to be made, that is to say only frequency set F2 will now provide a satisfactory signal. If the chosen reception point is at, say, point J on the border between cells 9 and 11 (i.e. on a 'deflection' point of the dotted line 20′ and therefore at 90° with respect to the local antenna boresights, or, in other words, on the boundary of the two local antenna beams), there would, at first sight, appear to be no limitation on the choice of frequency set for best reception, the radiation from either antenna at E providing the same signal strength. However, on closer examination it can be seen that frequency set F2 is to be preferred, since the antenna at G on set F2 is radiating in a direction away from the reception point J, whereas the antenna on set F1 includes the point J within its beam angle. Thus, if set F2 is chosen, interference from the transmitter at G is reduced by the high front/back ratio of the F2 antenna at G.

The angle α is carefully chosen in conjunction with the transmit antenna cut-off rate to prevent high levels of interference between neighbouring cells in a row of the lattice. For typical directional microwave transmit antennas the angle α should lie in the range of approximately 15 to 25°. Within this range the effect on interference levels for reception in a direction orthogonal to the lattice rows is minimal for a receiving antenna of the type to which Figure 2(a) relates. That is to say that for reception at point A in Figure 4 from the transmitter at site B, essentially the same low level of interference will be achieved as was demonstrated above in relation to Figure 3.

It can be seen, therefore, that the two-frequency set lattice arrangement described above with reference to Figure 4 provides an immunity to interference which is at least as good as the known three-frequency set arrangement of omnidirectional antennas shown in Figure 1. For the avoidance of doubt it is reiterated here that the term "frequency set" is to be taken to include a reference to the selective use of polarisation, a technique well-known in the art. In this way, the two frequency sets required in the arrangement of Figure 4 can be realised by generating pairs of orthogonally polarised signals of the same frequency. Such a technique advantageously requires only one transmitter per site for each signal or programme to be broadcast.

It will be apparent that a network of the type described above with reference to Figure 4 can improve the efficiency of frequency spectrum usage by up to 50 per cent by taking advantage of the directional characteristics of high frequency antennas. A number of practical benefits follow the adoption of non-omnidirectional antennas. First, many ideal transmitter sites for new services such as MVDS are already occupied by existing masts for other purposes, and the mast-tops are rarely available for use by a new omnidirectional antenna. Nonetheless, the twin 180° sector antenna can be mounted readily as two separate antennas on opposite sides of the mast. Second, since line-of-sight coverage is strongly dependent on the height and elevation angle of the transmit antenna with respect to the distant horizon, it is now possible to optimise height and elevation angle independently for each direction. Finally, as already mentioned, two orthogonally polarised transmit antennas may provide the two "frequency sets", avoiding the need for two sets of transmitting equipment operating on different frquencies at each site.

It will be appreciated from the illustrative example of Figure 4 that alleviation of potential interference between adjacent transmitters in the network is dependent on two factors. First, it is assumed that the receiving antenna has a directional characteristic so that, from an interference viewpoint, only a transmitter which is adjacent to and lying in substantially the same direction as the local transmitter needs to be considered. Second, it is arranged that two potentially interfering transmit antennas at adjacent sites in the network, i.e. antennas using the same frequency set, are directed respectively more and less towards a point of reception lying on a line through the two sites. In the specific example of Figure 4, the latter feature is a result of the corresponding beam boundaries of transmit antennas at adjacent sites on a line through the network lying on alternate sides of the line and deviating from the line by a common angle. However, it will be appreciated that the angle $\alpha$ is not essentially the same at each site. Its magnitude can be determined empirically at each site according to the effect of the local terrain, etc. on interference levels.

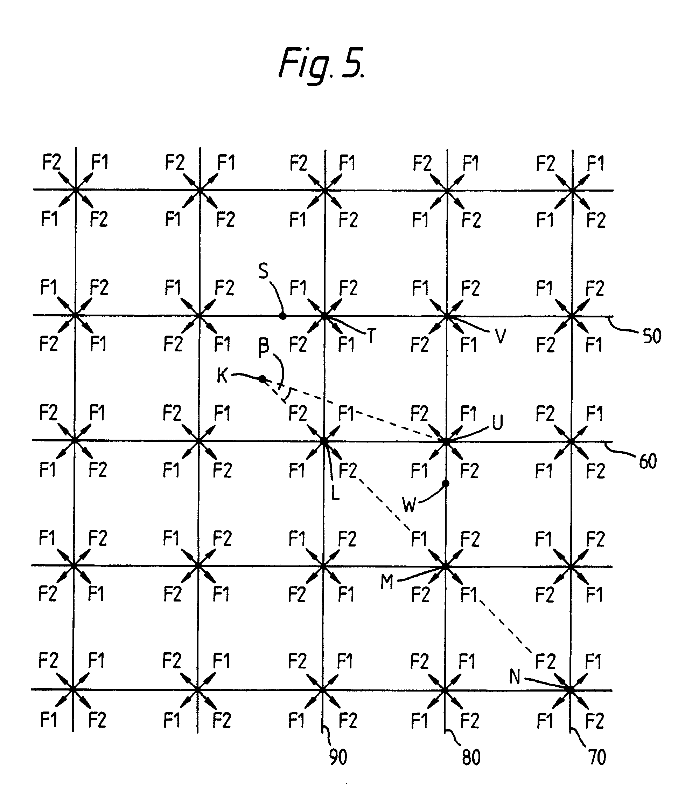

Consider now Figure 5, which shows a square lattice network having transmitter sites at the corners of each square. Again, two frequency sets F1 and F2 are used, but each transmitter site now accommodates four 90° sector transmit antennas. Each antenna radiates a quadrant beam pattern, i.e. a beam extending to +/-45° from the boresight, so that the reception area or cell (not shown) associated with each site now comprises four 90° beams, with adjacent beams again having partly radial boundaries. A typical radiation pattern template for the transmit antenna is shown in Figure 2(c). The important parameters are again a high front/back ratio and a rapid cut-off rate just above +/-45° from the antenna boresight. In this example, the cut-off falls by at least 20dB within 20° from the 45° position. The antenna boresights at each site are shown in Figure 5 by the arrowed lines. One frequency set is used per pair of opposing antennas at each site. The direction of radiation of the two frequency sets at each site is chosen so that along any diagonal drawn through squares in the lattice the frequency sets used by any two adjacent facing transmit antennas are different. The boundaries between adjacent beams at each site are aligned with the sides of the lattice squares.

For reception at the maximum range from a local transmitter, i.e. at the centre of a square in the lattice, the choice of transmitter/frequency set is arbitrary (assuming no obstructions, etc. affect the line of sight), all four transmitters at the corners of the square concerned being equally distant. Assume, for example, that reception at point K is required and the transmitter at point L is chosen. In this case, the relevant frequency set is F2. Using a directional receiving antenna, i.e. having a narrow beam angle, the next adjacent transmitter site lying in the same direction is at point M. However, at this transmitter site the relevant antenna, i.e. the one including point K within its beam angle, is radiating on frequency set F1 and so can be disregarded as a source of interference. However, it can be seen that interference from that direction may arise from the transmitter at site N. If the distance from K to L is z, then the distance from K to N will be 5z and the interfering signal from N will be substantially attenuated over that distance relative to the local signal from L. Interference from the transmitter site U is determined by the receiving antenna radiation pattern template. An interfering signal from site U will be at an angle $\beta$ from the boresight of a receiving antenna at K directed towards the local transmitter site L. For the square lattice the angle β is approximately 26°. By using a receiving antenna having the radiation pattern template shown in Figure 2(a), the interfering signal power (from U) will be more than 20dB below the local signal power (from L).

However, for reception at a point on a side of any square in the lattice, i.e. along one of the boundaries between adjacent beams, it can be seen that, with the antennas at each transmitter site orientated as shown, interference will result from a site adjacent the local site, irrespective of the frequency set chosen for reception. For example, at the point S on row 50, reception from the local site T will be subject to interference from site V. Similarly, at the point W on column 80, reception from the local site U will be subject to interference from site V in the same column. It can be easily shown that in the worst case for reception at any point on a row or column in the lattice, the interfering signal power will be approximately 10dB below the local signal power.

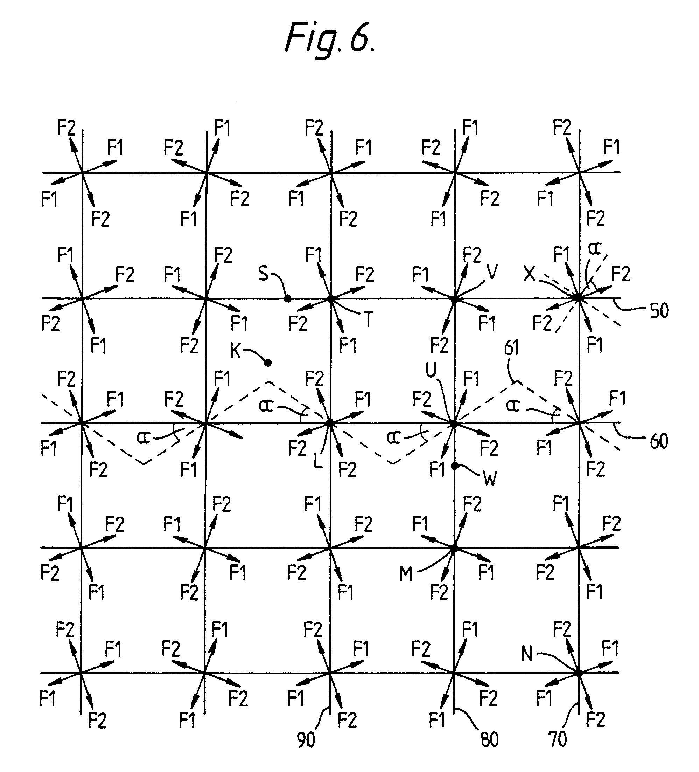

However, as in the triangular lattice network of Figure 4, interference between adjacent transmitters can be reduced by suitable adjustment of the orientation of the antennas at each site. Such an adjustment to the Figure 5 arrangement has been made in Figure 6, to which reference is now made.

In Figure 6, all four antenna boresights at each transmitter site have been steered together through a predetermined angle α so that their relative angular separations are maintained. The beam boundaries at each site are thus no longer aligned with the sides of the lattice squares. For example, it can be seen from the figure that all the antenna orientations at sites in column 70 have been steered clockwise through angle α, the dotted lines drawn at site X in row 50 indicating the original orientation of the antennas at that site. In the adjacent column 80, all antennas have been steered anti-clockwise through the same angle α. The antennas in the next column 90 have been steered clockwise as in column 70, and so on, so that along any row in the lattice the antennas are alternately steered in clockwise and anti-clockwise directions. The effect of this change is that, for adjacent sites in any row in the lattice, corresponding boundaries at the two sites lie on alternate sides of a line through the sites of that row. This is indicated, for example, by the dotted line 61 drawn through the sites in row 60. In the vicinity of each site the dotted line 61 shows the deviation of the antenna beam boundaries from their original positions in Figure 5, where they are aligned with line 60. Thus it can be seen that corresponding boundaries at adjacent sites in the row deviate from the line 60 by a common angle α, but in opposite directions.

Examining now, by way of example, the new orientations of the antennas in row 50, it can be seen that for reception at point S of a signal from site T, frequency set F2 should be selected, since the F2 antenna at T is directed more towards point S than the F1 antenna at T, the F2 antenna including point S within its 90° beam. However, at site V the potentially interfering F2 antenna on the left-hand side is now so orientated that its 90° beam angle excludes point S. Thus, by correct choice of antenna radiation pattern templates and the angle α, there will be no significant interference from site V, and it is apparent that the nearest interfering antenna at a site in the same direction as the local transmitter is at site X. In the worst case, when point S is on the mid-point of the side of a square, the nearest interfering transmitter will be at a distance 5 times greater than the local transmitter, sufficiently remote not to cause serious interference. The same result is obtained for reception at a point on any column of the lattice, so that, for reception at any point on a row or column in the lattice, the antenna at the local site and a potentially interfering antenna at the next nearest site are directed respectively more and less towards the reception point. It will be appreciated that the definition of what is a row and what is a column is arbitrary and made purely for the sake of a clear description.

This adjustment of the orientation of the antennas has no significant effect on interference immunity for reception in a diagonal direction across the lattice. For reception at the point K from site L the nearest interfering transmitter remains at site N, i.e. the same as in Figure 5.

As in the triangular lattice, the choice of the angle α is again dependent upon the transmit antenna radiation pattern template, which determines through what angle a potentially interfering transmit antenna must be steered for its beam to effectively exclude the reception point. In this example, i.e. with a transmit antenna having the radiation pattern template shown in Figure 2(c), the angle α may be made 20° to effect a fall in the interfering signal level of at least 20dB. For typical directional microwave transmit antennas the angle α preferably lies in the range 15 to 25°. It will be appreciated that, as mentioned previously in relation to Figure 4, the angle α is not essentially the same at every site, but may be determined empirically at each site according to the local environment. Similarly, it will be appreciated that in certain circumstances it may be desirable to adjust the beam angle of one or more of the antennas at any site to take account of local conditions.

It will be further appreciated that other combinations of lattices and antenna radiation patterns are possible and may prove of benefit in some applications. The use of the square lattice is preferred to the triangular lattice in view of the relative ease with which the 90° sector antenna can be constructed compared with the 180° sector antenna. Whereas the arrangements described use two frequency sets, as defined herein, it will be appreciated that more than two frequency sets may be used to further improve immunity from interference.

## Claims

1. A network of transmitting units for providing broadcast signal coverage of a plurality of contiguous reception areas (4,5,6,etc.), each defined by a respective transmitting unit situated at a site (B,C,E,etc.) within the reception area, each transmitting unit comprising two or more directional antennas, the network being characterised in that, to minimise interference at a point (D) which lies in line with and beyond adjacent sites (E,G) in the network, antennas (F2), one from each of the two sites (E,G), which potentially cause said interference, are directed respectively more (E) and less (G) towards said point (D).

2. A network according to Claim 1, wherein each reception area is defined by the beams of said two or more antennas, the common boundaries (10′,20′,etc.) between adjacent beams being at least partly radial, each transmitting unit being so adapted that its transmissions (F1,F2) of the broadcast signal in adjacent beams can be distinguished by a receiver located on one of said common boundaries, the network being characterised in that corresponding said boundaries (20′) at adjacent sites (E,G) on a line (20) through a plurality of said sites (B,E,G,etc.) lie on alternate sides of said line (20).

3. A network according to Claim 2, wherein said transmitting unit comprises two said antennas, each antenna having a beam angle of 180 degrees.

4. A network according to Claim 2, wherein said transmitting unit comprises four said antennas, each antenna having a beam angle of 90 degrees.

5. A network according to any of Claims 2 to 4, wherein said corresponding boundaries at adjacent sites on said line deviate from said line by a common angle ($\alpha$), but in opposite directions.

6. A network according to Claim 5, as appendent to Claim 3 or Claim 4, wherein said common angle ($\alpha$) lies substantially in the range 15 to 25 degrees.

7. A network according to any preceding claim, wherein each said transmitting unit is adapted to transmit said signal on different frequencies (F1,F2) to permit discrimination between its transmissions in any two adjacent beams.

8. A network according to any of Claims 1 to 6, wherein each said transmitting unit is adapted to transmit said signal with different polarisations (F1,F2) to permit discrimination between its transmissions in any two adjacent beams.

# Fig. 1.

Fig. 2(a)

Fig. 2(b)

Fig. 2(c)

# Fig.3.

# Fig.4.

# Fig. 5.

# Fig.6.